# FASCICULE DE BREVET EUROPEEN

(11) **EP 3 440 485 B1**
(45) Date de publication et mention de la délivrance du brevet: **05.10.2022**
(21) Numéro de dépôt: 17715740.1
(22) Date de dépôt: 05.04.2017
(51) Int. Cl.: G02B 5/20, G02B 26/02, G02B 27/01

(54) **AFFICHEUR TÊTE-HAUTE**
HEADS-UP-ANZEIGE
HEADS-UP DISPLAY

(30) Priorité: 05.04.2016 FR 1600578
(43) Date de publication de la demande: 13.02.2019
(73) Titulaire: Valeo Comfort and Driving Assistance, 94046 Créteil Cedex (FR)
(72) Inventeur: PERSIANI, Vincent, 94046 Créteil CEDEX (FR)
(74) Mandataire: Delplanque, Arnaud
(86) Numéro de dépôt international: PCT/EP2017/058168
(87) Numéro de publication internationale: WO 2017/174687

(56) Documents cités:
- WO-A1-2014/013144
- JP-A- 2003 131 145
- US-A- 5 204 773

## Description

### DOMAINE TECHNIQUE AUQUEL SE RAPPORTE L'INVENTION

La présente invention concerne l'affichage tête haute au sein des véhicules, notamment des véhicules automobiles.

Elle concerne plus particulièrement un afficheur tête haute.

L'invention s'applique particulièrement avantageusement dans le cas où l'on souhaite pouvoir atténuer au moyen d'un filtre le faisceau lumineux généré par l'afficheur.

### ARRIÈRE-PLAN TECHNOLOGIQUE

On connaît, par exemple du document WO 2014/013 144, un afficheur tête haute comprenant une unité de génération d'un faisceau lumineux représentant une image, une unité de projection du faisceau lumineux en direction d'une lame semi-transparente, un filtre présentant une transmittance variable dans son plan d'extension et disposé transversalement au faisceau lumineux de manière à être traversé par le faisceau lumineux en un point d'impact, et un mécanisme agencé pour réaliser un mouvement relatif du filtre et du faisceau lumineux, selon le plan d'extension du filtre, de manière à déplacer ledit point d'impact dans le plan d'extension du filtre.

On peut ainsi régler l'atténuation du faisceau lumineux par le filtre en déplaçant le filtre dans son plan d'extension.

On prévoit alors typiquement que la transmittance évolue progressivement sur le filtre d'une transmittance élevée à une transmittance faible afin que la transmittance obtenue au niveau du faisceau lumineux puisse être réglée par le déplacement adéquat du filtre.

Cette solution est toutefois mal adaptée à des changements brusques de luminosité (par exemple en entrant ou en sortant d'un tunnel en plein jour), où le filtre devrait être déplacé à grande vitesse, ce qui imposerait alors l'utilisation d'une cinématique coûteuse. Le document JP 2003 131145 A divulgue un système comprenant un atténuateur variable, composé d'un mécanisme permettant de faire coulisser deux lames bloquant la lumière l'une par rapport à l'autre, afin de faire varier la surface d'ouverture entre deux fibres optiques. Le document US 5 204 773 A divulgue une système de deux filtres mobiles, disposés l'un derrière l'autre, et ayant des gradients de transmission opposés afin de mieux contrôler un flux lumineux.

### OBJET DE L'INVENTION

Dans ce contexte, la présente invention propose un afficheur tête-haute selon la revendication 1, dans lequel le filtre comporte une première région dans laquelle la transmittance varie dans un sens (c'est-à-dire par exemple décroît) d'une première valeur, en un premier point, à une seconde valeur, en un second point, avec un premier gradient, et une seconde région dans laquelle la transmittance varie dans le même sens (dans l'exemple précité : décroît) de la première valeur audit premier point à une troisième valeur, en un troisième point, avec un second gradient supérieur au premier gradient, et un module de commande conçu pour commander le mécanisme de manière à déplacer le point d'impact, depuis le premier point, sélectivement dans la première région ou dans la seconde région (c'est-à-dire soit dans la première région, soit dans la seconde région).

Le module de commande peut ainsi faire évoluer le point d'impact (point de traversée du filtre par le faisceau lumineux) soit dans une région de faible gradient, pour obtenir une bonne précision du réglage, soit dans une région de fort gradient, lorsque l'on souhaite faire varier rapidement l'atténuation du faisceau lumineux.

Selon le principal mode de réalisation, le filtre comprend également une première bande présentant une transmittance croissante selon une direction donnée et/ou une seconde bande présentant une transmittance croissante selon autre direction opposée à la direction donnée ; la première bande et la seconde bande sont juxtaposées.

La première région s'étend dans la première bande. Le troisième point est quant à lui situé dans la seconde bande. Le segment reliant le premier point et le troisième point est orthogonal à ladite direction donnée.

Avec une telle structure, un déplacement selon ladite direction (ou la direction opposée) permet de faire évoluer la transmittance avec un faible gradient, tandis qu'un déplacement orthogonal à cette direction permet de faire évoluer la transmittance avec un fort gradient.

Selon un mode de réalisation non revendiqué, le second point peut être identique au troisième point.

Dans un mode de réalisation non revendiqué, le filtre peut être monté en rotation autour d'un axe. La transmittance peut quant à elle être variable en fonction de l'angle du point concerné autour dudit axe.

C'est dans ce cas par rotation du filtre dans un sens ou dans l'autre (autour dudit axe) que le point d'impact évolue soit dans la première région (à faible gradient de transmittance), soit dans la seconde région (à fort gradient de transmittance).

On peut prévoir dans ce cas que la première région s'étende sur plus de 300° autour dudit axe et/ou que la seconde région s'étende sur moins de 60° autour dudit axe.

Des modes de réalisation additionnels sont définis dans les revendications dépendantes.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un exemple d'afficheur tête haute conforme à l'invention ;
- la figure 2 représente un exemple de dispositif de formation d'image utilisable dans l'afficheur tête haute de la figure 1 ;
- la figure 3 représente le mode de réalisation principal de filtre selon l'invention utilisable dans le dispositif de formation d'image de la figure 2 ; et
- la figure 4 représente un second exemple non revendiqué Z de filtre utilisable dans le dispositif de formation d'image de la figure 2.

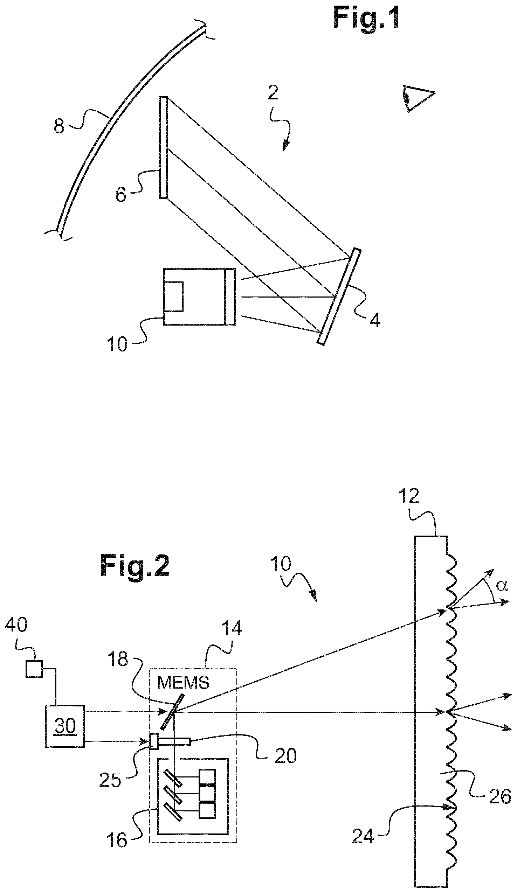

La figure 1 représente schématiquement les éléments principaux d'un afficheur tête haute 2 installé dans un véhicule (ici un véhicule automobile).

Un tel afficheur tête haute 2 comprend un dispositif de formation d'image 10 qui génère un faisceau lumineux représentant une image à afficher, un système optique de projection 4 (ici un miroir de renvoi) et une lame semi-transparente 6, réalisé ici sous la forme d'un combineur dédié, situé entre le conducteur et le pare-brise 8 du véhicule. En variante, le pare-brise 8 pourrait être utilisé en tant que lame semi-transparente.

Le système optique de projection 4 projette (ici par réflexion sur le miroir de renvoi) le faisceau lumineux généré par le dispositif de formation d'image 10 en direction de la lame semi-transparente 6, ce qui permet d'afficher une image virtuelle dans le champ de vision du conducteur.

À cet égard, la lame semi-transparente 6 est de préférence disposée entre le pare-brise 8 du véhicule et les yeux du conducteur. On peut prévoir en variante que le système optique de renvoi 4 transmette le faisceau lumineux généré par le dispositif de formation d'image 10 sur le pare-brise 8, qui joue alors le rôle de combineur (auquel cas la lame semi-transparente est omise).

Comme déjà indiqué, le système optique de projection 4 comprend ici un simple miroir de renvoi (ou miroir de repliement). En variante, il pourrait comprendre une pluralité de miroirs et/ou d'autres éléments optiques.

La figure 2 représente un exemple de réalisation du dispositif de formation d'image 10.

Ce dispositif de formation d'image 10 comprend un diffuseur 12 et une unité de balayage 14 qui génère un faisceau lumineux de direction variable de manière à pouvoir balayer la face arrière du diffuseur 12.

L'unité de balayage 14 comprend un module de formation de faisceau 16 et un miroir mobile 18, par exemple réalisé sous forme d'un microsystème électromécanique (ou MEMS pour *"MicroElectroMechanical System").*

Le module de formation de faisceau 16 comprend typiquement trois sources de lumière monochromatiques, telles que des sources laser, dont les faisceaux lumineux respectifs (monochromatiques) sont combinés (par exemple à l'aide de miroirs dichroïques) afin de former le faisceau lumineux polychromatique (ici laser) émis en sortie du module de formation de faisceau 16.

Ce faisceau lumineux généré par le module de formation de faisceau 16 est dirigé vers le miroir mobile 18, dont l'orientation est commandée par un module de commande 30 de façon à ce que le faisceau lumineux réfléchi (par le miroir mobile 18) balaie la face arrière du diffuseur 12.

Le dispositif de formation d'image 10 comprend également un filtre 20 traversé par le faisceau lumineux. Dans l'exemple décrit ici, le filtre 20 est situé au sein de l'unité de balayage 14, entre le module de formation du faisceau 16 et le miroir mobile 18.

Le filtre 20 pourrait toutefois en variante être situé à un autre emplacement, en particulier dans le dispositif de formation d'image 10, dès lors qu'il est traversé par le faisceau lumineux. Le filtre 20 pourrait par exemple être intégré au module de formation de faisceau 16, ou être positionné en aval du miroir mobile 18 (dans l'unité de balayage 14 ou à proximité de celle-ci).

Le filtre 20 est réalisé sous la forme d'une plaque (ou lame) définissant un plan d'extension (perpendiculaire à la tranche de la plaque).

Le filtre 20 est positionné de sorte que son plan d'extension soit perpendiculaire à la direction générale du faisceau lumineux qui traverse le filtre 20.

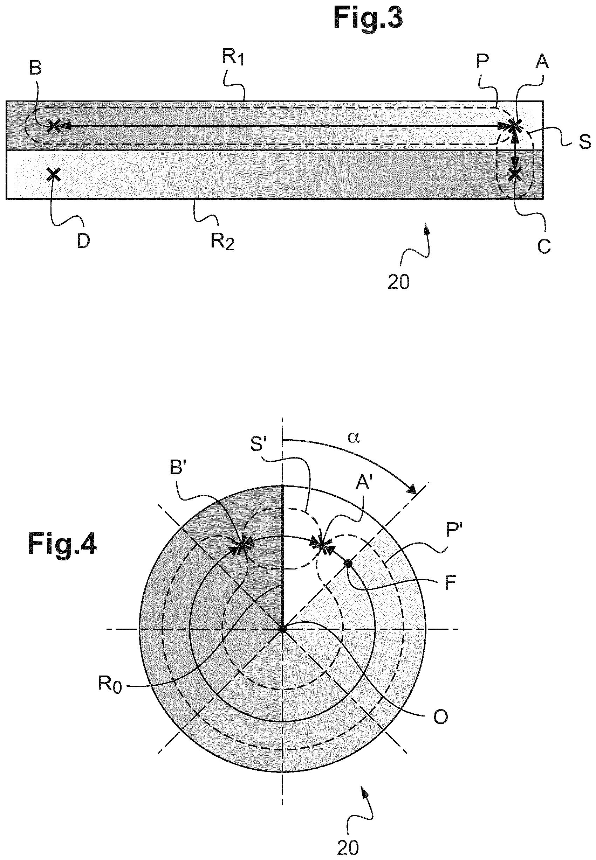

Le filtre 20 présente par ailleurs une transmittance variable dans son plan d'extension, comme bien visible sur les figures 3 et 4 et expliqué plus précisément dans le cadre de la description de ces figures donnée ci-dessous.

Le filtre 20 est monté dans l'afficheur tête haute 2 (ici dans le dispositif de formation d'image 10, précisément dans l'unité de balayage 14) au moyen d'un mécanisme 25 permettant un déplacement du filtre 20 dans son plan d'extension et agissant sous la commande du module de commande 30.

Ainsi, le module de commande 30 peut commander le déplacement, au moyen du mécanisme 25, du filtre 20 dans son plan d'extension et faire varier de la sorte le point d'impact du faisceau lumineux sur le filtre 20, ce qui permet de faire varier l'atténuation du faisceau lumineux par le filtre 20 (du fait de la transmittance variable du filtre 20 selon le point d'impact utilisé).

Dans ce cadre, le module de commande 30 reçoit une information représentative de la luminosité ambiante dans l'habitacle du véhicule d'un capteur de lumière ambiante 40.

Ainsi, lorsque la luminosité mesurée par le capteur de lumière ambiante 40 est élevée (par exemple lors d'une conduite de jour), le module de commande 30 commande une faible atténuation (ou une atténuation quasi-nulle) du faisceau lumineux en déplaçant le filtre 20 de sorte que le point d'impact soit situé sur une région de transmittance élevée.

À l'inverse, lorsque la luminosité mesurée par le capteur de lumière ambiante 40 est faible (par exemple lors d'une conduite de nuit), le module de commande 30 commande une forte atténuation du faisceau lumineux en déplaçant le filtre 20 de sorte que le point d'impact soit situé sur une région de faible transmittance.

On présente plus loin en référence aux figures 3 et 4 diverses stratégies utilisées pour faire varier l'atténuation du faisceau lumineux.

Le diffuseur 12 comporte (ici sur sa face avant opposée à sa face balayée par le faisceau lumineux reçu de l'unité de balayage 14) une structure de diffusion 24 qui provoque un étalement angulaire du faisceau lumineux (par exemple un étalement angulaire d'un angle α = 19°).

Un tel diffuseur 12 est donc du type à augmenter la taille de la pupille de sortie (ou EPE pour *"Exit Pupil Expandef"*)*.*

Le substrat 26 du diffuseur 12 est réalisé dans un matériau transparent (ou translucide), par exemple en verre ou en polycarbonate. La structure de diffusion 24 est par exemple réalisée par une matrice de microlentilles.

La figure 3 représente un premier exemple de filtre utilisable dans l'afficheur tête haute 2, ici dans le dispositif de formation d'image 10.

Le filtre de la figure 3 y est représenté dans son plan d'extension.

Le filtre de la figure 3 est formé d'une première bande R₁, ici rectangulaire, et d'une seconde bande R₂, ici elle aussi rectangulaire.

La première bande R₁ et la seconde bande R₂ sont de même longueur et sont juxtaposées (ici contigües) de manière à partager un côté (formant une longueur pour chaque rectangle R₁, R₂).

Dans la première bande R₁, la transmittance du filtre est croissante dans une direction donnée (de gauche à droite en figure 3), correspondant à la longueur de la première bande R₁. Dans la première bande R₁, la transmittance du filtre est par exemple croissante d'une valeur inférieure à 10% à une valeur supérieure à 90%.

La transmittance du filtre est par ailleurs croissante dans la seconde bande R2, mais dans une direction opposée à la direction donnée susmentionnée. Dans la seconde bande R₂, la transmittance du filtre est par exemple croissante d'une valeur inférieure à 10% à une valeur supérieure à 90%. (On remarque que les valeurs de transmittance données s'entendent sur l'ensemble du spectre visible.)

Du fait de la construction du filtre qui vient d'être présentée, le filtre comporte notamment une première région P (qui s'étend ici sur la longueur de la première bande R₁) présentant un faible gradient de transmittance et une seconde région S (qui s'étend à cheval sur la première bande R₁ et la seconde bande R₂) présentant, en particulier au lieu de jonction de la première bande R₁ et de la seconde bande R₂, un fort gradient de transmittance.

On prévoit par exemple en effet que, pour chaque bande R₁, R₂, la longueur de la bande concernée soit supérieure à 5 fois la largeur de la bande concernée (ce qui permet d'obtenir un gradient relativement faible dans la longueur par rapport au gradient présent à la jonction des deux bandes R₁, R₂).

On va à présent décrire deux évolutions possibles de l'atténuation du faisceau lumineux générée par le filtre de la figure 3 sous la commande du module de commande 30.

On considère que le module de commande 30 a préalablement commandé le mécanisme 25 de sorte que le faisceau lumineux traverse le filtre en un point A situé dans une région de transmittance élevée (par exemple supérieure à 90 %) de la première bande R₁. Ce point est ici situé à la frontière de la première région P et de la seconde région S définies plus haut.

Le faisceau lumineux est donc faiblement atténué et l'image virtuelle est donc affichée avec une intensité lumineuse importante (ce qui correspond au cas où le capteur de lumière ambiante 40 mesure une intensité élevée).

Si l'intensité lumineuse mesurée par le capteur de lumière ambiante 40 diminue légèrement (c'est-à-dire en pratique que la variation d'intensité mesurée, ou la variation d'intensité souhaitée pour l'image virtuelle, est inférieure à un seuil prédéterminé), le module de commande 30 commande le déplacement du filtre (au moyen du mécanisme 25) dans la longueur de la première bande R₁ (c'est-à-dire horizontalement sur la figure 3), ce qui permet un déplacement du point d'impact du faisceau lumineux à l'intérieur la première région P jusqu'à atteindre une zone du filtre ayant la transmittance souhaitée.

Cette évolution du point d'impact dans la première région P se poursuit tant que l'évolution de l'intensité lumineuse mesurée par le capteur de lumière ambiante 40 et celle de la transmittance recherchée en conséquence sont douces.

Le point d'impact peut ainsi évoluer jusqu'à un point B situé dans une région de faible transmittance (par exemple inférieure à 10%) de la première bande R₁.

On remarque que ceci permet de régler avec précision la transmittance (la première région présentant un faible gradient de transmittance) et donc l'atténuation du faisceau lumineux.

En revanche, en considérant à nouveau la situation où le faisceau lumineux traverse le filtre au point A, si l'intensité lumineuse mesurée par le capteur de lumière ambiante 40 diminue brusquement (c'est-à-dire en pratique que la variation d'intensité mesurée, ou la variation d'intensité souhaitée pour l'image virtuelle, est supérieure à un seuil prédéterminé), le module de commande 30 commande le déplacement du filtre (au moyen du mécanisme 25) en direction de la seconde bande R₂ (c'est-à-dire verticalement sur la figure 3), ce qui permet un déplacement du point d'impact du faisceau lumineux à l'intérieur la seconde région S jusqu'à atteindre la région de faible transmittance (par exemple inférieure à 10%) de la seconde bande R₂ (en particulier un point C située dans cette région).

On profite ainsi du fort gradient de transmittance présent dans la seconde région S pour provoquer, au moyen d'un faible déplacement du filtre, une diminution rapide de la transmittance et donc une atténuation rapide du faisceau lumineux.

Le filtre peut ensuite éventuellement être déplacé (sous la commande du module de commande 30 et par le mécanisme 25) à l'intérieur de la seconde bande R₂ de sorte que le point d'impact atteigne un point ayant la transmittance souhaitée.

À partir de cette situation, le point d'impact évolue dans la seconde bande R₂ en l'absence de variation brusque de l'intensité lumineuse. Le point d'impact peut ainsi évoluer jusqu'à une zone de transmittance élevée (point D en figure 3) de la seconde bande R₂.

La figure 4 représente un second exemple de filtre utilisable dans l'afficheur tête haute 2, ici dans le dispositif de formation d'image 10.

Le filtre de la figure 4 y est représenté dans son plan d'extension.

Le filtre de la figure 4 a la forme d'un disque de centre O.

La transmittance varie en fonction de la position angulaire du point concerné autour du centre O : si on note R₀ un rayon de référence, la transmittance décroit (par exemple d'une valeur supérieure à 90% à une valeur inférieure à 10%) en fonction de l'angle α formé entre le point F concerné et le rayon de référence R₀ par rapport au centre O.

Le mécanisme 25 permet, sous la commande du module de commande 30, la rotation du filtre autour de son centre O (c'est-à-dire autour d'un axe passant par son centre O et perpendiculaire au plan d'extension du disque).

Le faisceau lumineux traverse par ailleurs le filtre à distance du centre O.

Du fait de la construction du filtre qui vient d'être présentée, le filtre comporte notamment une première région P' (qui s'étend ici sur la quasi-totalité du filtre, excepté aux abords du rayon de référence R₀) présentant un faible gradient de transmittance (la transmittance variant d'une valeur supérieure à 90% à une valeur inférieure à 10% sur plus de 300° d'angle) et une seconde région S' (qui s'étend autour du rayon de référence R₀) présentant, en particulier au niveau du rayon de référence R₂, un fort gradient de transmittance (la transmittance ayant une valeur supérieure à 90% en un premier point A' et une valeur inférieure à 10% en un second point B' sur un secteur angulaire inférieure à 60°).

On va à présent décrire deux évolutions possibles de l'atténuation du faisceau lumineux générée par le filtre de la figure 4 sous la commande du module de commande 30.

On considère que le module de commande 30 a préalablement commandé le mécanisme 25 de sorte que le faisceau lumineux traverse le filtre au point A' susmentionné (situé dans une région de transmittance élevée). Ce point est ici situé à la frontière de la première région P' et de la seconde région S' définies plus haut.

Le faisceau lumineux est donc faiblement atténué et l'image virtuelle est donc affichée avec une intensité lumineuse importante (ce qui correspond au cas où le capteur de lumière ambiante 40 mesure une intensité élevée).

Si l'intensité lumineuse mesurée par le capteur de lumière ambiante 40 diminue légèrement (c'est-à-dire en pratique que la variation d'intensité mesurée, ou la variation d'intensité souhaitée pour l'image virtuelle, est inférieure à un seuil prédéterminé), le module de commande 30 commande la rotation du filtre (au moyen du mécanisme 25) de sorte que le point d'impact du faisceau lumineux évolue dans la première région P' jusqu'à atteindre une zone du filtre ayant la transmittance souhaitée.

Le point d'impact peut ainsi évoluer jusqu'au point B' susmentionné (situé dans une région de faible transmittance) du fait de variations douces de l'intensité lumineuse mesurée par le capteur de lumière ambiante.

On remarque que ceci permet de régler avec précision la transmittance (la première région présentant un faible gradient de transmittance) et donc l'atténuation du faisceau lumineux.

En revanche, en considérant à nouveau la situation où le faisceau lumineux traverse le filtre au point A', si l'intensité lumineuse mesurée par le capteur de lumière ambiante 40 diminue brusquement (c'est-à-dire en pratique que la variation d'intensité mesurée, ou la variation d'intensité souhaitée pour l'image virtuelle, est supérieure à un seuil prédéterminé), le module de commande 30 commande la rotation du filtre (au moyen du mécanisme 25) de manière à faire évoluer le point d'impact du faisceau lumineux à l'intérieur la seconde région S' (soit une rotation en sens inverse de la rotation utilisée comme indiqué plus haut pour faire évoluer le point d'impact à l'intérieur de la première région P') jusqu'à atteindre la région de faible transmittance (par exemple inférieure à 10%), c'est-à-dire le point B' susmentionné.

On profite ainsi du fort gradient de transmittance présent dans la seconde région S' pour provoquer, au moyen d'une faible rotation du filtre (typiquement une rotation d'un angle inférieur à 30°), une diminution rapide de la transmittance et donc une atténuation rapide du faisceau lumineux.

## Revendications

1. Afficheur tête haute (2) comprenant :
- une unité de génération (10) d'un faisceau lumineux représentant une image,
- une unité de projection (4) du faisceau lumineux en direction d'une lame semi-transparente (6),
- un filtre (20) présentant une transmittance variable dans son plan d'extension et disposé transversalement au faisceau lumineux de manière à être traversé par le faisceau lumineux en un point d'impact, et
- un mécanisme (25) agencé pour réaliser un mouvement relatif du filtre (20) et du faisceau lumineux, selon le plan d'extension du filtre, de manière à déplacer ledit point d'impact dans le plan d'extension du filtre (20) ;
le filtre (20) comportant une première région (P) dans laquelle la transmittance varie dans un sens d'une première valeur, en un premier point (A), à une seconde valeur, en un second point (B), avec un premier gradient, et une seconde région (S) dans laquelle la transmittance varie dans le même sens de la première valeur audit premier point (A) à une troisième valeur, en un troisième point (C), avec un second gradient supérieur au premier gradient, **caractérisé par** un module de commande (30) conçu pour commander le mécanisme (25) de manière à déplacer le point d'impact, depuis le premier point (A), sélectivement dans la première région (P) ou dans la seconde région (S), et dans lequel le filtre (20) comprend une première bande (R₁) présentant une transmittance croissante selon une direction donnée et une seconde bande (R₂) présentant une transmittance croissante selon autre direction opposée à la direction donnée, la première bande (R₁) et la seconde bande étant juxtaposées (R₂), la première région (P) s'étend sur la longueur de la première bande (R₁) et la seconde région (S) s'étend à cheval sur la première bande (R1) et la seconde bande (R2), et le point (C) est situé dans la seconde bande (R2).

2. Afficheur tête haute selon la revendication 1 lequel le segment reliant le premier point (A) et le troisième point (C) est orthogonal à ladite direction donnée.

3. Afficheur tête haute selon l'une des revendications 1 à 2, dans lequel la distance entre le premier point (A) et le second point (B) est supérieure à 5 fois la distance entre le premier point (A) et le troisième point (C).

4. Afficheur tête haute selon l'une des revendications 1 à 3, dans lequel la première valeur est supérieure à 90 %, et dans lequel la seconde valeur et la troisième valeur sont inférieures à 10 %.

## Patentansprüche

1. Head-Up-Anzeige (2), die Folgendes beinhaltet:
- eine Einheit zur Erzeugung (10) eines Lichtbündels, das ein Bild darstellt,
- eine Einheit zur Projektion (4) des Lichtbündels in Richtung eines halbtransparenten Schirms (6),
- einen Filter (20), der in seiner Erstreckungsebene eine variable Durchlässigkeit aufweist und quer zu dem Lichtbündel angeordnet ist, sodass er an einem Einfallpunkt von dem Lichtbündel durchquert wird, und
- einen Mechanismus (25), der dazu eingerichtet ist, eine Relativbewegung des Filters (20) und des Lichtbündels gemäß der Erstreckungsebene des Filters durchzuführen, um den Einfallpunkt in der Erstreckungsebene des Filters (20) zu verlagern;
wobei der Filter (20) Folgendes umfasst: einen ersten Bereich (P), in dem die Durchlässigkeit gemäß einer Tendenz von einem ersten Wert an einem ersten Punkt (A) zu einem zweiten Wert an einem zweiten Punkt (B) mit einem ersten Gradienten variiert, und einen zweiten Bereich (S), in dem die Durchlässigkeit gemäß derselben Tendenz von dem ersten Wert an dem ersten Punkt (A) zu einem dritten Wert an einem dritten Punkt (C) mit einem zweiten Gradienten variiert, der größer als der erste Gradient ist,
**gekennzeichnet durch** ein Steuermodul (30), das dazu ausgelegt ist, den Mechanismus (25) so zu steuern, dass der Einfallpunkt ausgehend von dem ersten Punkt (A) selektiv in den ersten Bereich (P) oder in den zweiten Bereich (S) verlagert wird,
und wobei der Filter (20) ein erstes Band (R₁), das eine ansteigende Durchlässigkeit gemäß einer gegebenen Richtung aufweist, und ein zweites Band (R₂), das eine ansteigende Durchlässigkeit gemäß einer anderen Richtung, die zu der gegebenen Richtung entgegengesetzt ist, aufweist, beinhaltet, wobei das erste Band (R₁) und das zweite Band (R₂) nebeneinander liegen, wobei sich der erste Bereich (P) über die Länge des ersten Bandes (R₁) erstreckt und sich der zweite Bereich (S) quer über das erste Band (R1) und das zweite Band (R2) erstreckt und wobei sich der Punkt (C) in dem zweiten Band (R2) befindet.

2. Head-Up-Anzeige nach Anspruch 1, wobei das Segment, das den ersten Punkt (A) und den dritten Punkt (C) verbindet, zu der gegebenen Richtung orthogonal ist.

3. Head-Up-Anzeige nach einem der Ansprüche 1 bis 2, wobei der Abstand zwischen dem ersten Punkt (A) und dem zweiten Punkt (B) 5-mal größer als der Abstand zwischen dem ersten Punkt (A) und dem dritten Punkt (C) ist.

4. Head-Up-Anzeige nach einem der Ansprüche 1 bis 3, wobei der erste Wert mehr als 90 % beträgt und wobei der zweite Wert und der dritte Wert weniger als 10 % betragen.

## Claims

1. Head-up display (2) comprising:
- a unit (10) for generating a light beam representing an image,
- a unit (4) for projecting the light beam towards a semi-transparent plate (6),
- a filter (20) having a variable transmittance in its plane of extension and arranged transversely to the light beam so that the light beam passes therethrough at a point of impingement, and
- a mechanism (25) arranged to effect a relative movement of the filter (20) and of the light beam, according to the plane of extension of the filter, so as to move said point of impingement in the plane of extension of the filter (20);
the filter (20) comprising a first region (P) in which the transmittance varies in one direction from a first value, at a first point (A), to a second value, at a second point (B), with a first gradient, and a second region (S) in which the transmittance varies in the same direction from the first value at said first point (A) to a third value, at a third point (C), with a second gradient greater than the first gradient,
**characterized by** a control module (30) designed to control the mechanism (25) so as to move the point of impingement from the first point (A) selectively into the first region (P) or into the second region (S),
and in which the filter (20) comprises a first band (R₁) exhibiting a transmittance that increases in a given direction and a second band (R₂) exhibiting a transmittance that increases in another direction opposite to the given direction, the first band (R₁) and the second band (R₂) being juxtaposed, the first region (P) extending over the length of the first band (R₁) and the second region (S) extending across the first band (R₁) and the second band (R₂), and the point (C) is located in the second band (R₂) .

2. Head-up display according to Claim 1, in which the segment linking the first point (A) and the third point (C) is orthogonal to said given direction.

3. Head-up display according to one of Claims 1 or 2, in which the distance between the first point (A) and the second point (B) is greater than five times the distance between the first point (A) and the third point (C).

4. Head-up display according to one of Claims 1 to 3, in which the first value is greater than 90%, and in which the second value and the third value are less than 10%.
